# EUROPÄISCHE PATENTANMELDUNG

(11) **EP 3 845 303 A1**
(43) Veröffentlichungstag der Anmeldung: **07.07.2021**
(21) Anmeldenummer: 20217405.8
(22) Anmeldetag: 28.12.2020
(51) Int. Cl.: B01J 3/03, B01J 4/00, B01J 4/02, B01J 19/18, C01B 19/04, C01G 3/12, C01G 5/00, C01G 9/08, C01G 11/02, C01G 17/00, C01G 21/21, C01G 28/00, C01G 29/00, C01G 30/00, C01G 45/00, C01G 49/12, C01G 53/11

(54) **VERFAHREN ZUR HERSTELLUNG VON ANTIMONTRISULFID**

(30) Priorität: 30.12.2019 AT 511602019
(71) Anmelder: Rimmer, Karl, 9231 Köstenberg (AT)
(72) Erfinder: Rimmer, Karl, 9231 Köstenberg (AT)
(74) Vertreter: KLIMENT & HENHAPEL

(57) **Zusammenfassung**

Gezeigt wird ein Verfahren zur Herstellung von Antimon(III)-sulfid oder Halbmetall- und Metallsulfiden, wobei das Antimon oder Metall oder Halbmetall und der Schwefel bei Temperaturen von 200°C bis 1500°C, insbesondere von 800°C bis 1200°C, in einem Behälter (2, 3) zu Antimon(III)-sulfid oder einer Legierung umgesetzt werden, wobei das Verfahren die folgenden Verfahrensschritte umfasst:
- Physikalisches Mischen des Antimons oder des Metalls oder Halbmetalls in körniger Form sowie des Schwefels in körniger Form bis zum Erhalt eines gleichmäßigen Gemischs;
- Zuführen des gleichmäßigen Gemischs in den Behälter (2, 3); und
- Erhitzen des gleichmäßigen Gemischs auf 200°C bis 1500°C, insbesondere auf 800°C bis 1200°C, wobei das gleichmäßige Gemisch geschmolzen wird und wobei die Herstellung des Antimon(III)-sulfid oder der Legierung in einer inerten Schutzatmosphäre umfassend mindestens ein Inertgas erfolgt.

## Beschreibung

### GEBIET DER ERFINDUNG

Die Erfindung betrifft ein Verfahren zur Herstellung von Antimon(III)-sulfid oder Halbmetall- und Metallsulfiden, wobei das Antimon oder Metall oder Halbmetall und der Schwefel bei Temperaturen von 200°C bis 1500°C, insbesondere von 800°C bis 1200°C, in einem Behälter zu Antimon(III)-sulfid oder einer Legierung umgesetzt werden.

Als Metall kommen insbesondere Bi, Fe, Ag, Zn, Cu, Cd, Pb, Mn und Ni in Frage. Es kann daher mit Hilfe dieser Erfindung etwa auch Eisen(II)-sulfid FeS und Bismut(III)-sulfid Bi₂S₃ hergestellt werden.

Als Halbmetalle kommen insbesondere As, Sb, Te und Ge in Frage. Es kann daher mit Hilfe dieser Erfindung etwa auch Germanium(II)-sulfid GeS und Arsen(III)-sulfid As₂S₃ hergestellt werden.

Die verschiedenen Metalle können sowohl rein als auch als Mischung zur Herstellung von Sulfiden, verwendet werden.

### STAND DER TECHNIK

In der DE 198 15 992 A1 wird ein Verfahren zur Herstellung von Zinnsulfiden geoffenbart, bei welchem Zinn in fein verteilter Form mit Schwefel unter Inertgas oder Luftatmosphäre bei Temperaturen von 200°C bis 1500°C, bevorzugt 800-1200°C, umgesetzt wird, etwa in einem Muffelofen.

Dieses Verfahren unterscheidet sich jedoch gravierend vom Verfahren der gegenständlichen Erfindung, da einerseits Kohlenstoff zugegeben wird, der wie ein saurer Katalysator wirkt, und andererseits ein Gemisch verschiedener Zinnsulfide und anderer Produkte zur Verwendung als Festschmiermittel hergestellt wird. Im gegenständlichen Verfahren ist Ziel jedoch die Legierung einer bestimmten Verbindung herzustellen, da insbesondere eine Verunreinigung durch Nebenprodukte die Qualität der Legierung vermindert.

### AUFGABE DER ERFINDUNG

Es ist daher eine Aufgabe der vorliegenden Erfindung, ein Verfahren zur Herstellung von Antimon(III)-sulfid oder Metall- oder Halbmetallsulfiden, insbesondere von Antimon(III)-sulfid, zur Verfügung zu stellen. Insbesondere soll durch das vorherige physikalische Mischen der beiden zu legierenden Substanzen die Herstellung einer möglichst homogenen Antimon(III)-sulfidlegierung oder Legierung ermöglicht werden.

### DARSTELLUNG DER ERFINDUNG

Diese Aufgabe wird durch ein Verfahren gemäß Anspruch 1 gelöst, bei welchem Antimon oder Halbmetall oder Metall und der Schwefel bei Temperaturen von 200°C bis 1500°C, insbesondere von 800°C bis 1200°C, in einem Behälter zu Antimon(III)-sulfid oder einer Legierung umgesetzt werden, wobei folgende Schritte im Verfahren vorgesehen sind:
- Physikalisches Mischen des Antimons oder des Metalls oder Halbmetalls in körniger Form sowie des Schwefels in körniger Form bis zum Erhalt eines gleichmäßigen Gemischs;
- Zuführen des gleichmäßigen Gemischs in den Behälter; und,
- Erhitzen des gleichmäßigen Gemischs auf 200°C bis 1500°C, insbesondere auf 800°C bis 1200°C, wobei das gleichmäßige Gemisch geschmolzen wird und wobei die Herstellung des Antimon(III)-sulfid oder der Legierung in einer inerten Schutzatmosphäre umfassend mindestens ein Inertgas erfolgt.
Um eine unerwünschte Reaktion mit dem Luftsauerstoff d.h. insbesondere eine Oxidation an der Oberfläche der Legierungsmetalle bzw. eine Reaktion mit Schwefel und der damit einhergehenden Bildung von Nebenprodukten während der Herstellung von Antimon(III)-sulfid bzw. der Legierung jedenfalls weitgehend zu unterbinden, ist vorgesehen, dass die Herstellung des Antimon(III)-sulfids bzw. der Legierung in einer inerten Schutzatmosphäre umfassend mindestens ein Inertgas erfolgt.

Als Inertgas kommen in diesem Zusammenhang insbesondere N₂, H, He, Ne, Ar, Kr, Xe und Rn in Betracht.

Erfindungsgemäß ist vorgesehen, dass Antimon oder das Metall oder Halbmetall und der Schwefel vor dem Einbringen in den Behälter zur Herstellung von Antimon(III)-sulfid oder der Legierung physikalisch gemischt werden, um eine besonders homogene Legierung herzustellen. Dieses physikalische Mischen kann durch alle hierzu geeigneten gängigen im Stand der Technik bereits bekannten Verfahren durchgeführt werden, beispielsweise durch Schüttelmischer oder Pulvermischer.

Erfindungsgemäßes Antimon(III)sulfid bzw. andere mittels des erfindungsgemäßen Verfahrens hergestellte Sulfide können insbesondere als Reibbeläge bzw. als Bremsbeläge oder als abriebfeste bzw. abriebarme Flächen in der Technik verwendet werden. Vorzugsweise werden die erfindungsgemäßen Sulfide in der Automobil- oder Flugzeugindustrie oder im Bereich des Maschinenbaus und Bergbaus verwendet.

Antimon(III)-sulfid oder die Legierung lässt sich besonders effizient herstellen, wenn Antimon oder das Metall oder Halbmetall und Schwefel in körniger Form im geeigneten stöchiometrischen Verhältnis gemischt werden. Daher ist in einer besonders bevorzugten Ausführungsform vorgesehen, dass Antimon oder das Metall oder Halbmetall und der Schwefel stöchiometrisch gemischt werden.

Das Vorliegen von Antimon und Schwefel im geeigneten stöchiometrischen Verhältnis ist besonders vorteilhaft, weil es zwar prinzipiell möglich ist, die beiden Substanzen in jeglichem beliebigen Mengenverhältnis zu mischen, die ionischen Verbindungen bilden sich jedoch immer nur in einem bestimmten Verhältnis zueinander aus, wie im Fall von Antimon(III)-sulfid beispielsweise als Sb₂S₃.

Erfindungsgemäß ist dabei vorgesehen, dass Antimon oder das Metall oder Halbmetall sowie Schwefel in körniger Form d.h. insbesondere als Pulver oder Granulat vorliegen. Durch die körnige Form lassen sich besonders effizient Mengenverhältnisse im geeigneten stöchiometrischem Verhältnis miteinander vermischen.

In einer Ausführungsform der Erfindung ist vorgesehen, dass es beim Schmelzen und Legieren zu einer ständigen Zugabe des gleichmäßigen Gemischs und einem ständigen Abfluss der Antimon(III)-sulfidlegierung oder der Legierung kommt, um den Druck der Schmelze konstant zu halten.

Um eine Reaktion zwischen Schwefel und Luftsauerstoff während des erfindungsgemäßen Verfahrens jedenfalls weitgehend zu unterbinden, kann vorgesehen werden, dass der Behälter vor oder nach dem Zuführen des gleichmäßigen Gemischs gasdicht verschlossen und mit Inertgas gespült wird.

Um die chemische Reaktion zwischen Antimon oder Metall oder Halbmetall und Sulfid zu beschleunigen, um das Gemisch aus Antimon oder Metall oder Halbmetall und Schwefel möglichst homogen zu gestalten und um gegebenenfalls weitere zugegebene Portionen des festen gleichmäßigen Gemischs rascher zu schmelzen, ist in einer bevorzugten Ausführungsform der Erfindung vorgesehen, dass das gleichmäßige Gemisch durch Rühren vor und/oder beim Erhitzen und Schmelzen weiter gemischt wird.

Um weiteres gleichmäßiges Gemisch in den Behälter einbringen zu können und unerwünschte Nebenreaktionen zu verhindern, ist in einer Ausführungsform der Erfindung vorgesehen, dass das homogene Gemisch durch zumindest eine gasdichte Schleuse in den Behälter eingebracht wird.

In einer bevorzugten Ausführungsform der Erfindung ist vorgesehen, dass das homogene Gemisch über die gasdichte Schleuse durch einen Deckel des Behälters eingebracht wird. Dadurch kann der Behälter ohne solche Zuleitungen ausgebildet und entsprechend einfach gestaltet werden.

Die gasdichte Schleuse für das gleichmäßige Gemisch kann fest mit dem Deckel verbunden sein. Durch das Aufsetzen des Deckels auf den Behälter wird gleichzeitig die Schleuse am Behälter angeordnet und befestigt.

Um den Sauerstoffgehalt im Behälter zu messen und dadurch die Abbrandgefahr zu vermeiden, ist in einer besonders bevorzugten Ausführungsform der Erfindung vorgesehen, dass durch ein oder mehrere Sauerstoffmessgeräte zur Messung des Sauerstoffgehalts im Behälter und/oder in der gasdichten Schleuse der Sauerstoffgehalt gemessen wird.

Weiters ist in einer bevorzugten Ausführungsform vorgesehen, dass der Behälter und/oder die gasdichte Schleuse durch zumindest eine Vorrichtung mit Inertgas gespült werden, um unerwünschte Reaktionen, etwa Oxidationen mit Luftsauerstoff, zu verhindern.

### WEGE ZUR AUSFÜHRUNG DER ERFINDUNG

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:

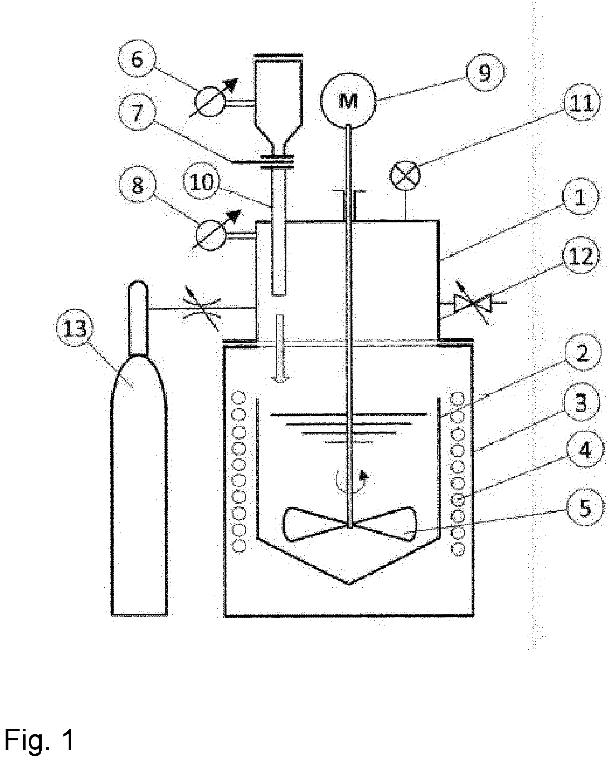

- Fig. 1: eine erfindungsgemäße Vorrichtung
- Fig. 2: zusätzlich einen Auffang- oder Abgussbehälter für die fertige Legierung

Eine erfindungsgemäße Vorrichtung umfasst einen Behälter, der einen Innenbehälter 2 für die Legierung enthält, welcher auch als Legierungsbehälter bezeichnet wird, sowie einen Außenbehälter 3, der auch als Legierungskammer bezeichnet wird und den Innenbehälter 2 umschließt. Der Innenbehälter 2 ist seitlich, zwischen Innen- und Außenbehälter, von einer Heizung 4, etwa einer elektrischen Heizung, umgeben, sodass in seinem Inneren Temperaturen von 200°C bis 1500°C, insbesondere von 800°C bis 1200°C, erzeugt werden können, die ein Metall oder Halbmetall, in diesem Fall Antimon, zum Schmelzen bringen. Der Außenbehälter 3 ist aus Stahl gefertigt und mit feuerfesten Ofensteinen, z.B. Grafit, ausgekleidet. Es kann jedoch auch jede andere Art der Feuerfestauskleidung zur Anwendung kommen. Mit einem Deckel 1 kann der Behälter 2, 3 gasdicht verschlossen werden, etwa mittels feuerfester Dichtschnüre an den Verbindungsstellen zwischen Deckel 1 und Außenbehälter 3. Der Deckel 1 besteht ebenfalls aus Stahl und ist mit feuerfestem Material ausgekleidet. Zumindest der Außenbehälter 3 kann mit einer Luftkühlung zur Kühlung der Seitenwände des Innen- oder Außenbehälters 2, 3 ausgestattet sein. Der Deckel 1 ist als Hohlraumdeckel ausgebildet, der mit Luft gekühlt werden kann. Da in den Deckel 1 die Chargenführung 10 gasdicht mündet, durch welche das gleichmäßige Gemisch zugeführt wird und die mittels eines Schieberverschlusses 7 - einer gasdichten Schleuse gleich - verschlossen werden kann, wird der Deckel 1 auch als Schleusenkammer bezeichnet.

Der Innen- und der Außenbehälter 2, 3 bilden somit einen Ofen, der Deckel 1 dient als Ofenabdeckung, auf ihm sind bei diesem Beispiel die gasdichte Schleuse 7, 10 für den Schwefel aufgebaut. Auch das Rührwerk 5, 9 ist in den Deckel 1 integriert.

Auf dem Deckel 1 kann ein Rahmen befestigt sein, an welchem der Deckel 1 zum Öffnen des Behälters 2, 3 nach oben gehoben werden bzw. zum Schließen des Behälters 2, 3 nach unten abgesenkt werden kann. An diesem Rahmen können auch die gasdichten Schleusen, hier die gasdichte Schleuse 7 für das gleichmäßige Gemisch, sowie das Rührwerk 5, 9 - zusätzlich zur Befestigung am Deckel 1 selbst - befestigt sein. Das Rührwerk 5, 9 umfasst einen außerhalb des Behälters 2, 3 bzw. Deckels 1 angeordneten Rührermotor 9, der einen Rührer 5 antreibt, welcher in den Behälter 2, 3 ragt und zum Beispiel aus Grafit gefertigt sein kann. Das Rührwerk 5, 9 gewährleistet ein weiteres Mischen des gleichmäßigen Gemischs während des Erhitzens und Schmelzens. Die gasdichte Schleuse 7 für das gleichmäßige Gemisch ist so ausgeführt, dass sie bei Bedarf mit Wasser gekühlt oder beheizt werden kann. Sowohl die gasdichte Schleuse 7, 10 als auch der Rührer 5 treten über außen gasdichte Öffnungen durch den Deckel 1 hindurch in den Innenraum des Behälters 2, 3. Im Deckel 1 kann auch ein Schauglas vorgesehen sein, um die Reaktion im Ofen genau beobachten zu können.

Mittels eines Sauerstoffmessgerätes 8 in Form einer Sauerstoffsonde kann der Sauerstoffgehalt des Gases im Behälter 2, 3, also im Ofenraum, gemessen werden. Mittels eines Sauerstoffgerätes 6 kann der Sauerstoffgehalt des Gases in der gasdichten Schleuse 7, 10 gemessen werden. Wenn der Sauerstoffgehalt zu hoch ist, wird mit Inertgas gespült. Der Sauerstoffgehalt wird laufend überwacht. Bei zu hohem Sauerstoffgehalt soll außerdem die Gemisch-Zufuhr gestoppt werden, weil sonst die Abbrandgefahr des Schwefels steigt.

Das Absperrventil 12 dient dazu, bei geschlossenem Deckel 1 das Gas aus dem Behälter 2, 3 ablassen zu können, damit dieses durch Inertgas aus dem Schutzgasbehälter 13 ersetzt werden kann. Es kann auch zum Verringern eines Überdrucks verwendet werden, der durch das Druckmessgerät 11 festgestellt werden kann.

Das erfindungsgemäße Verfahren kann sowohl im sogenannten Batchbetrieb als auch im kontinuierlichen Betrieb ausgeführt werden. Im Folgenden wird die Herstellung von Antimon(III)-sulfid erläutert.

Im Batchbetrieb werden zunächst Antimonpulver und Schwefelpulver physikalisch in einem herkömmlichen Mischaggregat gemischt.

Das durch den vorherigen Mischvorgang erhaltene gleichmäßige Gemisch wird in den Innenbehälter 2 eingebracht und auf 800-1200°C erhitzt. Die Ofenabdeckung in Form des Deckels 1, welche die gasdichte Schleuse 7, 10 für die weitere Zugabe des gleichmäßigen Gemischs trägt, wird auf den Außenbehälter 3 aufgesetzt und gasdicht verschraubt. Der Ofenraum wird mit Inertgas aus dem Schutzgasbehälter 13 gespült, um den Sauerstoffgehalt zu minimieren, damit ein Schwefelabbrand vermieden werden kann. Sowohl im Batchbetrieb als auch im kontinuierlichen Betrieb wird das gleichmäßige Gemisch portionsweise über die mit Inertgas gespülte gasdichte Schleuse 7, 10 in den Behälter 2,3 eingebracht und mit Hilfe des Rührwerks 5, 9 weiter homogen verteilt. Die chemische Reaktion 2 Sb + 3 S → Sb₂S₃ findet statt.

Um den Druck im Innenbehälter 2 und im Außenbehälter 3 jedoch möglichst konstant zu halten, wird kontinuierlich gleichmäßiges Gemisch zugegeben, beispielsweise durch eine Zellradschleuse, da auch kontinuierlich fertiges Antimon(III)-sulfid bzw. Legierung entnommen wird. Durch die kontinuierliche Zugabe von gleichmäßigem Gemisch wird ein Druckabfall durch die Entnahme von fertigem Antimon(III)-sulfid verhindert.

Das entstandene flüssige Antimon(III)-sulfid wird in eine geschlichtete Gussform abgegossen. Dabei kann die Schmelze entweder geschöpft oder durch Kippen des Behälters 1 geleert werden. Wegen einer möglichen oxidativen Reaktion sind nur geschlichtete, das heißt mit einem silikatischen Innenanstrich versehene, Gussformen zugelassen.

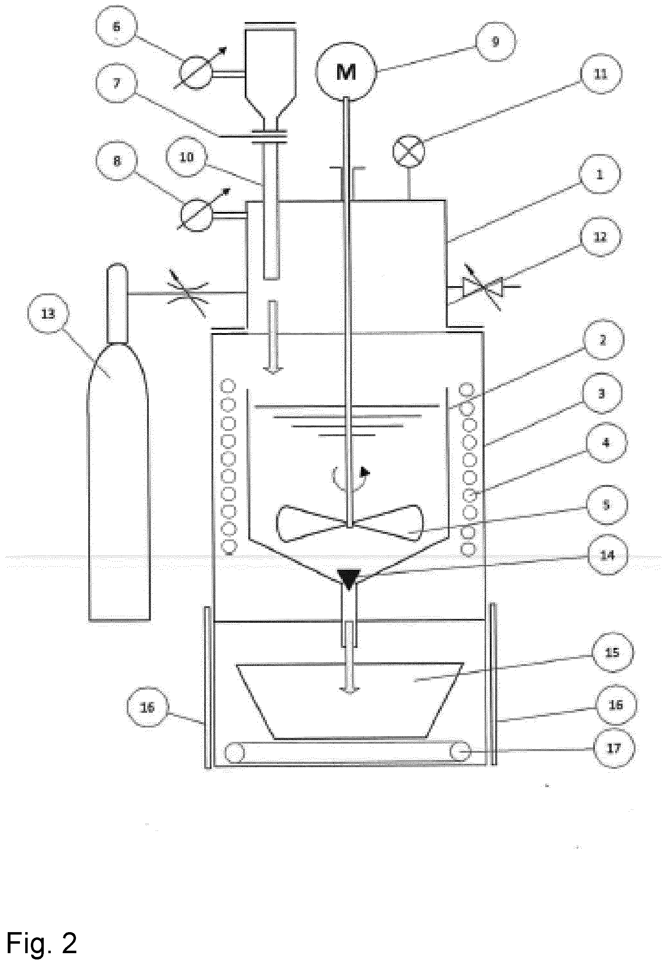

Gemäß Fig. 2 kann die Schmelze auch durch eine Öffnung an der tiefsten Stelle des Innenbehälters 2, die während der Herstellung der Schmelze durch einen Verschluss 14 verschlossen ist, abgelassen werden und in einem darunter angeordneten Auffang- oder Abgussbehälter 15 aufgefangen werden. Dieser Auffangbehälter 15 kann ebenfalls mittels Schleusentüren 16 gasdicht gegenüber der Umgebung abgeschlossen werden, die Schleusentüren 16 bilden dann mit weiteren Wänden eine sogenannte Abgusskammer. Mittels einer - hier als Förderband ausgeführten - Austragsmechanik 17 kann der Auffangbehälter 15 vom Bereich unter dem Behälter 2, 3 (aus der Abgusskammer) weggefördert werden.

Zwischen dem Verschluss 14 und der Mündung in den Auffangbehälter 15 kann eine weitere Schleuse (Vorschleuse) vorgesehen werden, um den Innenbehälter 2 und die Abgusskammer gasdicht voneinander zu trennen. Nach der Abgusskammer kann eine weitere Schleuse vorgesehen sein, die gasdicht gegenüber der Abgusskammer und der Umgebung abschließbar ist und wo die abgegossene Schmelze abgekühlt wird.

Sobald die Schmelze erstarrt ist, kann das Antimon(III)-sulfid zerkleinert und auf eine geforderte Korngröße gemahlen werden.

Die chemische Zusammensetzung des erfindungsgemäß hergestellten Antimon(III)-sulfids in Gewichts% ist wie folgt:

| | | |
|---|---|---|
| Antimon | Sb | 75-85% |
| Schwefel | S | 12-23% |
| Blei | Pb | < 300 ppm |
| Kupfer | Cu | < 1% |
| Kalzium | Ca | < 2% |
| Silizium | Si | < 1,5% |
| Natrium | Na | < 8% |
| Kadmium | Cd | < 0,0002% |
| Chromate | Cr(VI) | < 0,0001% |

### BEZUGSZEICHENLISTE

- 1: Deckel (Schleusenkammer)
- 2: Innenbehälter (Legierungsbehälter)
- 3: Außenbehälter (Legierungskammer)
- 4: Heizung
- 5: Rührer des Rührwerks
- 6: Sauerstoffmessgerät
- 7: Schieberverschluss für Chargenführung 10
- 8: Sauerstoffmessgerät
- 9: Rührermotor des Rührwerks
- 10: Chargenführung
- 11: Druckmessgerät
- 12: Absperrventil
- 13: Schutzgasbehälter
- 14: Verschluss des Innenbehälters (Legierungsbehälters) 2
- 15: Auffangbehälter
- 16: Schleusentüren
- 17: Austragsmechanik

## Patentansprüche

1. Verfahren zur Herstellung von Antimon(III)-sulfid oder Halbmetall- und Metallsulfiden, wobei das Antimon oder Metall oder Halbmetall und der Schwefel bei Temperaturen von 200°C bis 1500°C, insbesondere von 800°C bis 1200°C, in einem Behälter (2, 3) zu Antimon(III)-sulfid oder einer Legierung umgesetzt werden, wobei das Verfahren die folgenden Verfahrensschritte umfasst:
- Physikalisches Mischen des Antimons oder des Metalls oder Halbmetalls in körniger Form sowie des Schwefels in körniger Form bis zum Erhalt eines gleichmäßigen Gemischs;
- Zuführen des gleichmäßigen Gemischs in den Behälter (2, 3); und
- Erhitzen des gleichmäßigen Gemischs auf 200°C bis 1500°C, insbesondere auf 800°C bis 1200°C, wobei das gleichmäßige Gemisch geschmolzen wird und wobei die Herstellung des Antimon(III)-sulfid oder der Legierung in einer inerten Schutzatmosphäre umfassend mindestens ein Inertgas erfolgt.

2. Verfahren nach Anspruch 1, **dadurch gekennzeichnet, dass** einerseits das Antimon oder Metall oder Halbmetall in körniger Form und andererseits der Schwefel in körniger Form im geeigneten stöchiometrischen Verhältnis gemischt werden.

3. Verfahren nach einem der vorherigen Ansprüche, **dadurch gekennzeichnet, dass** es beim Schmelzen und Legieren zu einer ständigen Zugabe des gleichmäßigen Gemischs und einem ständigen Abfluss der Antimon(III)-sulfidlegierung oder der Legierung kommt, um den Druck der Schmelze konstant zu halten.

4. Verfahren nach einem der vorherigen Ansprüche, **dadurch gekennzeichnet, dass** der Behälter (2, 3) vor und/oder nach dem Zuführen des gleichmäßigen Gemischs gasdicht verschlossen und mit Inertgas gespült wird.

5. Verfahren nach einem der vorherigen Ansprüche, **dadurch gekennzeichnet, dass** das gleichmäßige Gemisch vor und/oder beim Erhitzen und Schmelzen im Behälter (2,3) durch Rühren weiter gemischt wird.

6. Verfahren nach einem der vorherigen Ansprüche, **dadurch gekennzeichnet, dass** das homogene Gemisch durch zumindest eine gasdichte Schleuse (7) in den Behälter (2, 3) eingebracht wird.

7. Verfahren nach Anspruch 6, **dadurch gekennzeichnet, dass** das homogene Gemisch über die gasdichte Schleuse (7) durch einen Deckel (1) des Behälters (2, 3) eingebracht wird.

8. Verfahren nach einem der vorherigen Ansprüche, **dadurch gekennzeichnet, dass** durch ein oder mehrere Sauerstoffmessgeräte (6, 8) zur Messung des Sauerstoffgehalts im Behälter (2, 3) und/oder in der gasdichten Schleuse (7,10) der Sauerstoffgehalt gemessen wird.

9. Verfahren nach einem der vorherigen Ansprüche, **dadurch gekennzeichnet, dass** der Behälter (2,3) und/oder die gasdichte Schleuse (7,10) durch zumindest eine Vorrichtung (13) mit Inertgas gespült wird.

10. Verwendung von Antimon(III)-sulfid oder Halbmetall- und Metallsulfiden, hergestellt in einem Verfahren nach einem der Ansprüche 1 bis 9, als abriebfeste oder abriebarme Fläche, insbesondere als Reibbelag oder Bremsbelag in der Automobil- oder Flugzeugindustrie.
